## Europäisches Patentamt

## European Patent Office

## Office européen des brevets

(19)

(11) Veröffentlichungsnummer: **0 084 144**
**B1**

(12) **EUROPÄISCHE PATENTSCHRIFT**

(45) Veröffentlichungstag der Patentschrift:
**21.09.88**

(21) Anmeldenummer: **82111789.2**

(22) Anmeldetag: **18.12.82**

(51) Int. Cl.⁴: **G 01 B 11/02,** G 01 B 11/03, G 01 B 11/00

(54) **Dreidimensionale interferometrische Längenmesseinrichtung.**

(30) Priorität: **15.01.82 DE 3201007**
**26.06.82 DE 3231719**

(43) Veröffentlichungstag der Anmeldung:
**27.07.83 Patentblatt 83/30**

(45) Bekanntmachung des Hinweises auf die Patenterteilung:
**21.09.88 Patentblatt 88/38**

(84) Benannte Vertragsstaaten:
**CH DE FR GB IT LI SE**

(56) Entgegenhaltungen:
**DE-A-2 348 272**
**DE-A-2 441 984**
**DE-B-2 159 134**
**DE-C-2 164 898**

(73) Patentinhaber: **Firma Carl Zeiss, D-7920 Heidenheim (Brenz) (DE)**

(72) Erfinder: **Heynacher, Erich, Dr., Lukas- Cranach- Strasse 26, D-7920 Heidenheim (Brenz) (DE)**
Erfinder: **Ludewig, Reinhard, Franz- Marc- Strasse 10, D-7920 Heidenheim (Brenz) (DE)**

EP 0 084 144 B1

LIBER, STOCKHOLM 1988

## Beschreibung

Die Erfindung betrifft eine dreidimensionale interferometrische Längenmeßeinrichtung, mit der die räumlichen Abmessungen von Werkstücken bzw Prüflingen hochgenau ermittelt werden können.

Insbesondere bei der Herstellung von abbildenden Systemen für Strahlung mit extrem kurzer Wellenlänge, z.B. Reflektoren für die Röntgenastronomie, wird ein Meßwerkzeug benötigt, das räumliche Messungen mit einer Genauigkeit erlaubt, die bis ca. zwei Größenanordnungen besser als die herkömmlicher Mehrkoordinatenmeßmaschinen ist. Eine für diesen Zweck brauchbare Meßeinrichtung muß mit interferametrischen Löngenmeßsystemen ausgerüstet sein, um die geforderte Auflösung von typisch 10 nm erreichen zu können.

Die gängigen, in drei Koordinaten messenden interferometrischen Meßeinrichtungen besitzen den van Mehrkoordinatenmeßmaschinen her bekannten Aufbau, bei dem die Meßsysteme an den Führungen der Maschine angebracht sind. Eine derartige Meßeinrichtung ist in der DE-C-2 809 954 beschrieben. Hier wird die Lage eines relativ zu einem Bearbeitungskopf in drei Raumrichtungen beweglichen Werkstücktisches mit Hilfe eines einzigen, mehrfach entlang der Führungen der beweglichen Teile der Einrichtung reflektierten Laserstrahls ermittelt. Bei dieser Einrichtung tritt bezüglich aller drei Meßachsen eine erhebliche Verletzung des Kamparatorprinzips auf. Fehler in den Führungen der Meßinrichtung schränken daher die prinzipiell erreichbare, interferometrische Meßgenauigkeit ein. Nun sind beispielsweise aus der DE-B-2 159 134 der DE-C-2 164 898 und DE-A-2 441 984 Komparatoren mit interferametrischen Meßsystemen in zwei Koordinatenrichtungen bekannt. Diesen Schriften ist jedoch kein Hinweis auf die genaue Anordnung eines Interferometer-Systems für die zusätzliche, dritte Koordinatenrichtung entnehmbar. In DE-B-2 159 134 wird nur die Möglichkeit zur Messung einer weiteren Koordinatenrichtung augedeutet.

Es ist die Aufgabe der vorliegenden Erfindung, eine Meßeinrichtung der eingangs genannten Art so auszubilden, daß eine von Führungsfehlereinflüßen und Instabilitäten möglichst unabhängige, hohe Meßgenauigkeit in drei Achsen erzielbar ist.

Diese Aufgabe wird durch die im Kennzeichen der Ansprüche 1 bzw. 2 genannnten Maßnahmen gelöst.

Mit dem erfindungsgemäßen Aufbau einer interferometrischen Meßeinrichtung ist es möglich einen sehr stabilen und kompakten Gesamtaufbau im wesentlichen unter Einhaltung des Komparatorprinzips in allen drei Koordinaten zu erzielen, so daß der Einfluß von Führungsfehlern auf die erreichbare Meßgenauigkeit praktisch keine Rolle spielt.

Die Spiegel des Raumnormals werden vorteilhaft aus dem gleichen Material kleiner Wärmeausdehnung gefertigt um thermische Einflüße auf die Meßgenauigkeit zu minimieren. Sie schließen aus Gründen der Stabilität zweckmäßig aneinander an und bilden einen Meßraum nach Art eines Tripelspiegels, dabei kann einer der Spiegel durch den Boden der Werkstückaufnahme selbst gebildet werden.

Bei einem starr an der Meßeinrichtung befestigten Taster ist die Meßgeschwindigkeit beschränkt, da im Zuge des Antastvorgangs die relativ großen Massen der verfahrbaren Teile exakt gesteuert werden müssen, um Kollisionen mit dem Prüfling bzw. dem Meßobjekt zu vermeiden.

Nun ist es zwar bekannt Meßmaschinen mit Taster auszurüsten, die einen nachgiebig gelagerten Taststift besitzen, der beim Antastvorgang ausgelenkt wird und Einrichtungen zur Erfassung der Auslenkung besitzt, über die der van den Meßsystemen der Maschine ermittelte Koordinatenmeßwert berichtigt wird. Diese bekannten Taster besitzen jedoch Meßwertgeber in Form von Induktivmeßsystemen u.ä., die in Bezug auf die erzielbare Maßgenauigkeit nicht mit interferometrischen Meßsystemen konkurrieren können.

Es ist daher zweckmäßig, die Längenmeßeinrichtung mit einem Taststifthalter möglichst geringer Masse zu versehen, der in das interferometrische System der Meßeinrichtung einbezogen ist. Letzteres wird dadurch erreicht, daß mindestens einer der interferometrischen Maßstrahlen aus zwei Teilstrahlen besteht und jeweils einer der beiden Teilstrahlen über ein seine Richtung umkehrendes Spiegelsystem geführt wird, das an dem in minderstens einer Koordinate gegenüber der Längenmeßeinrichtung beweglich gelagerten Taststifthalter befestigt ist.

Der Vorteil dieser Lösung liegt in der bei niedrigem Aufwand erreichbaren hohen Meßgenauigkeit, die dadurch erzielt wird, daß die Position des Taststifthalters direkt gegen den mit dem Meßobjekt verbundenen Referenzspiegel bestimmt wird. Für die Messung der Position des Taststifthalters ist aber kein zusätzliches Interferometer nötig, vielmehr kann einer der beiden Teilstrahlen eines handelsüblichen und beispielsweise in der DE-PS-2 348 272 beschriebenen Doppelstrahl-Planspiegelinterferometers über ein am Taster befestigtes Reflexionsprisma geführt werden, während der andere Teilstrahl direkt von der Meßeinrichtung auf den Referenzspiegel gerichtet wird. Somit werden Bewegungen der Meßeinrichtung relativ zum Meßobjekt und Bewegungen des Tasters relativ zur Meßeinrichtung gleichzeitig in Betrag und Richtung übereinstimmend durch ein einziges Interferometersystem noch vor der optoelektronischen Signalbildung zusammen erfaßt.

Da der Taststifthalter an optischen Teilen lediglich das Reflexionsprisma oder ein anderes geeignetes Spiegelsystem zu tragen hat, ist die Masse dieses der Kontur des Prüflings folgenden Teils sehr niedrig im Vergleich zu herkömmlichen Meßsystemen, bei denen das abtastende Teil die komplette Optik des Interferometerskopfes zu tragen hat.

Bei dem am Taster befestigten Spiegelsystem handelt es sich zweckmäßig um ein justierunempfindliches, sogenanntes Tripelprisma.

Es ist vorteilhaft den Taststifthalter mit drei separaten Spiegelsystemen zu versehen, die drei nach Art eines kartesischen Koordinatensystems geführten Meßstrahlen als Reflektoren dienen, um die Bewegung des Taststifthalters in allen drei Raumrichtungen zu erfassen. Dies ist selbst dann vorteilhaft, wenn der Taststifthalter nicht in allen drei Raumrichtungen verschiebbar gelagert ist, da auch durch Führungsfehler bedingter Versatz des Taststifthalters ermittelt werden kann.

In der Regel trägt der Taster eine Kugel, mit der das zu vermessende Objekt mechanisch angetastet wird. Es ist zweckmäßig Taststift an seinem Halter auswechselbar zu befestigen, dann kann an dem Taststifthalter anstelle der Kugel auch eine berührungslose, z.B. optische Tasteinrichtung ein Prüf- oder Justiergerät oder beispielsweise ein Mikroskop befestigt werden, wenn das zur Vermessung des Zielobjektes sinnvoll erscheint.

Weitere vorteilhafte Maßnahmen werden onhand der in den Figuren 1 bis 9 der Zeichnungen beschriebenen Ausführungsbeispiele erläutert:

Fig.1 zeigt ein erstes Ausführugsbeispiel der erfindungsgemäßen Meßeinrichtung in Seitenansicht;

Fig. 2 stellt eine Schnittzeichnung längs der Linie II - II in Fig. 1 dar;

Fig. 3 zeigt eine Schnittzeichnung eines zweiten Ausführungsbeispiels;

Fig. 4 ist eine perspeitivische Darstellung des Gehäuses 29 aus Fig. 3;

Fig. 5 zeigt eine Weiterbildung des Ausführungsbeispiels aus Fig. 3;

Fig. 6 zeigt eine auf Bewegungen in einer Koordinate reduzierte Prinzipskizze des Taststifthalters eines dritten Ausführungsbeispiels;

Fig. 7 skizziert die Optik des Interferometers 104 aus Fig. 6;

Fig. 8 zeigt einen ersten Schnitt durch den Meßkopf eines vierten Ausführungsbeispiels;

Fig. 9 zeigt einen zweiten Schnitt durch die Meßeinrichtung nach Fig. 8 längs der Linie III - III in Fig. 2;

Fig. 10 zeigt eine dritte Ansicht der Meßeinrichtung nach Fig. 8 und 9.

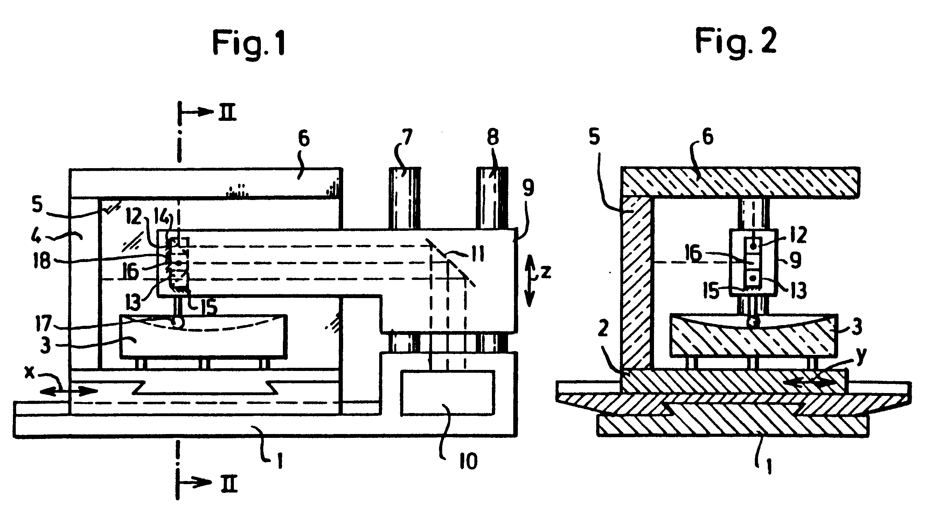

Die in Fig. 1 und Fig. 2 dargestellte Meßeinrichtung besitzt eine Basisplatte 1, auf der ein Tisch 2 über eine Kreuzschlittenführung verschieblich gelagert ist. Der Tisch 2 trägt das Werkstück, einen Hohlspiegel 3, und ein aus drei Spiegeln 4, 5 und 6 bestehendes Raumnormal, das den Meßraum über dem Tisch 2 von drei Seiten einschließt.

An zwei in der Basis 1 verankerten Säulen 7 und 8 ist ein Meßarm 9 vertikal verschieblich geführt, dessen in den Meßraum ragendes Ende einen Taster 17 trägt.

Über dem Taster 17 sind drei Interferometermeßköpfe angeordnet, die jeweils aus einem halbdurchlässigen Spiegel 12 bzw. 13 oder 16 und einem Referenzspiegel 14 bzw. 15 oder 18 bestehen. Die Meßköpfe und die jeweils gegenüberliegenden Spiegel des Raumnormals bilden drei interferometrische Meßstrecken, die von der in der Basis 1 gelagerten Lasereinheit 10 über den Spiegel 11 mit Strahlung versorgt werden.

Für die in der Waagerechten messenden Interferometer ist der Komparatorfehler sehr gering, da der Z-Abstand zwischen den Meßstrahlen in den Achsen x und y und der Tastkugel 17 klein ist. Für Messungen entlang der z-Achse ist das Komparatorprinzip streng erfüllt, so daß Meßfehler erster Ordnungen aufgrund von Kippungen des Meßarms 9 um die zur Papierebene senkrechte Achse y nicht in die Meßgenauigkeit der z-Koordinate eingehen.

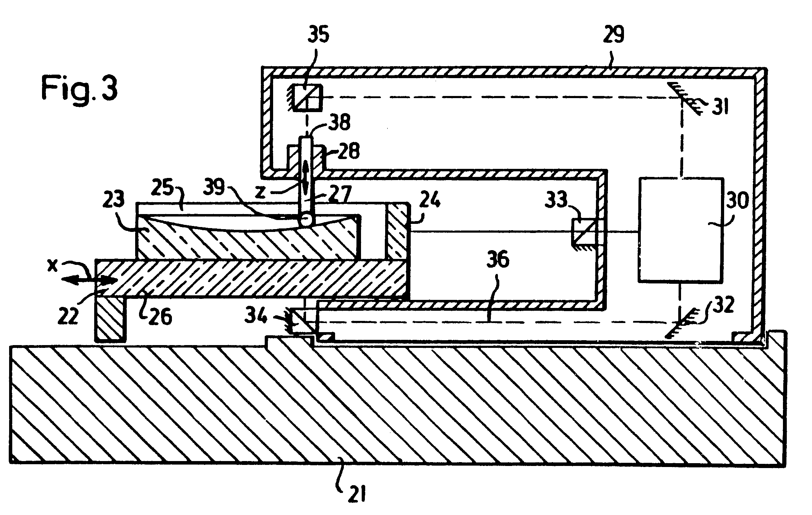

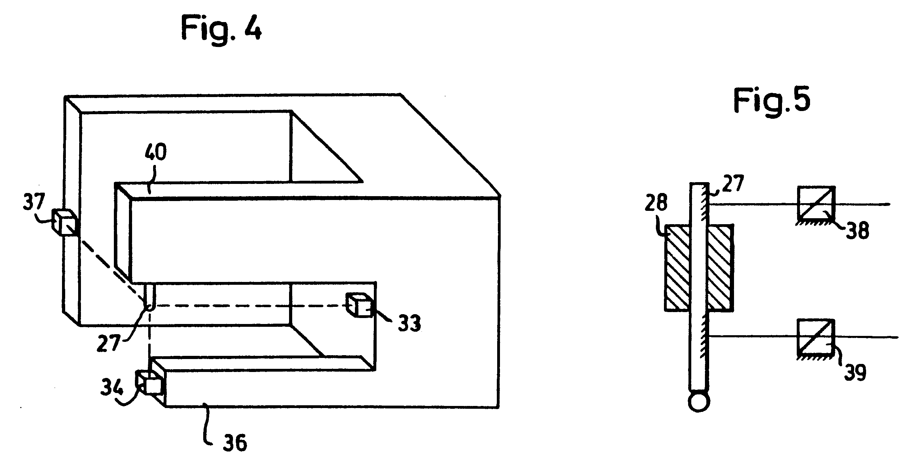

Die in den Figuren 3 und 4 dargestellte Meßeinrichtung besitzt eine Basis 21, beispielsweise aus Granit, auf der über Luftlager ein in zwei Richtungen geführter Tisch 22 aufgesetzt ist. Die Führungen des Tisches sind nicht dargestellt. Gleichfalls über Luftlager auf die Basis 21 aufgesetzt aber lagemäßig fixiert ist das die Meßeinrichtung tragende Gehäuse 29.

Wie Fig. 4 zeigt besitzt das Gehäuse 29 die Form eines an zwei Seiten ausgebrachten Quaders. Zwischen den Auslegern 36 und 40 des Gehäuses 29 läßt sich der Tisch verschieben.

Die verspiegelte Unterseite 26 des Tisches 22 (Fig. 3) und die darauf aufgesetzten Spiegel 24 und 25 bilden ein starres Raumnormal, das von den drei Interferometerköpfen 33, 34 und 37 angemessen wird. Versorgt werden die Interferometerköpfe von der Lasereinheit 30 im Gehäuse 29. Das Gehäuse 29 und der Tisch 22 mit den Spiegeln 24 und 25 bestehen aus dem gleichen Material geringer Wärmeausdehnung wie z.B. Zerodur oder Invar.

In der Achse (z), die senkrecht zu den Maßrichtungen der Interferometer 33 und 37 durch deren Schnittpunkt führt, ist ein Taster 27 im Gehäuse 29 beweglich gelagert. Das der Tastkugel 39 entgegengesetzte Ende 38 des Tasters ist verspiegelt und wird von einem vierten Interferometerkopf 35 angemessen.

Die Meßsysteme 34 und 35 führen somit eine Differenzmessung aus, die Meßfehler aufgrund von Höhenversatz des Tisches 23 bzw. des Gehäuses 29 ausschließt.

Da die waagerechten Meßachsen im wesentlichen mit der Oberfläche des Prüflings 23 (Hohlspiegel) fluchten, ist bei dieser Vorrichtung das Komparatorprinzip in allen drei Richtungen in sehr guter Näherung erfüllt. Jedoch ist der Taster 27 nicht starr mit dem Gehäuse 29 verbunden, so daß Verkippungen des Tasters 27 in seinem Lager 28 auftreten können, die sich auf die Meßgenauigkeit in der Waagerechten (x, y) auswirken. Um auch diese Verkippungen zu erfassen besitzt der Taster 27 in der modifizierten Ausführungsform nach Fig. 5 einen verspiegelten Schaft, der in den beiden Achsen x, y senkrecht zur Verschiebungsrichtung z von je einem Interferometersystem angemessen wird. Nur eines der beiden Interferametersysteme ist in der Fig. 5 dargestellt. Es wird im wesentlichen durch die Interferometerköpfe 38, 39 und die an beiden Seiten des Lagers 28 austretenden Spiegelflächen des Tasterschafts 27 gebildet.

Das Verkippungen anzeigende Differenzsignal dieser beiden Interferometer 35 kann entweder zur Beseitigung der Verkippung durch an dem Lager 28 angebrachte Piezoantriebe oder zu einer rechnerischen Korrektur des Meßergebnisses in y-Richtung verwendet werden.

Weiterhin kann das Meßergebnis rechnerisch in Bezug auf Ebenheitsabweichungen der Spiegel 24 - 26 und Abweichungen der rechtwinkligen Anordnung dieser Spiegel zueinander korrigiert werden. Dazu sind die ortsabhöngigen Deformationen des von den Spiegeln 24 - 26 gebildeten Meßraums einmal zu vermessen und, beispielsweise in Form von Näherungsfunktionen, im Auswerterechner der Maschine abzuspeichern. Anschließend werden diese Funktionen zur Korrektur der jeweiligen Meßwerte permanent herangezogen.

Bei dem in den Fig. 3 - 5 dargestellten Ausführungsbeispiel ist der Werkstücktisch in zwei Richtungen beweglich gelagert. Es ist natürlich ebenfalls möglich den Tisch 22 fest anzuordnen und das Gehäuse 29 beweglich anzuordnen oder beide Komponenten in jeweils einer Richtung beweglich zu lagern ohne daß dadurch die Anwendbarkeit der Meßvorrichtung eingeschränkt würde.

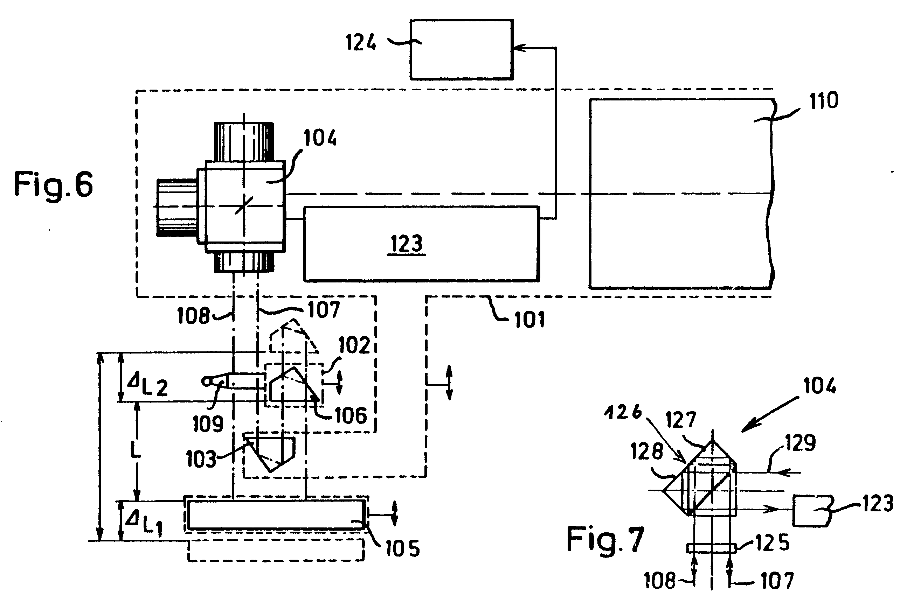

Die in Fig. 6 dargestellte interferometrische Meßeinrichtung besteht aus einem mit dem nicht gezeigten Prüfling verbundenen, ebenen Gegenspiegel 105 und dem relativ dazu verfahrbaren Teil 101, das die Meßsysteme, d.h. im wesentlichen die Interferometeroptik enthält. Das Teil 101 entspricht dem in Fig. 1 und 2 dargestellten Teil 9.

Die Interferometeroptik besteht aus einem Lasergenerator 110, einem Doppelstrahl-Planspiegelinterferometer 104, einer optoelektronischen Empfangseinheit 123 und einer Einheit 124 zur Meßwertausgabe.

Das Planspiegel-Interferometer besitzt den in Fig. 7 skizzierten Aufbau: ein Strahlteiler 126 zerlegt den auf ihn auffallenden, aus zwei senkrecht zueinander polarisierten und leicht frequenzverschobenen Komponenten des Zwei-Moden-Lasers 110 bestehenden Strahl 129 in zwei Teilstrahlen. Dabei bildet der durch den Strahlteiler 126 hindurchtretende Teilstrahl, der nach zweifacher Reflexion am Prisma 128 auf den Empfänger 123 auffällt, den Referenzstrahl. Der vom Strahlteiler 126 reflektierte Teilstrahl 107 fällt nach Durchgang durch die $\lambda/4$-Platte 125 auf einen Planspiegel auf, dessen Verschiebung gemessen werden soll, wird dort reflektiert und kann infolge der Drehung seiner Polarisationsebene nach zweimaligem Passieren der $\lambda/4$-Platte beim Zurücklaufen den Strahlteiler 126 passieren. Nach Umlenkung durch das Prisma 127 wird er als zweiter Meßstrahl 108 auf den Planspiegel reflektiert und erreicht noch nochmaliger Polarisationsdrehung wieder den Strahlteiler 126, wo er mit dem Referenzstrahl interferiert.

Am Teil 101 der Meßeinrichtung ist ein in Richtung der Meßstrahlen 107 und 108 beweglicher Kalter 102 für den Taster 109 aufgehängt. Dieser Halter 102 trägt ein Tripelprisma 106, das den von einem mit dem Teil 101 verbundenen, zweiten Tripelprisma 103 reflektierten Meßstrahl 107 ein zweites Mal umlenkt, bevor er auf den Planspiegel 105 auftrifft und von dort wieder reflektiert wird. Der zweite Meßstrahl 108 des Interferometers 104 gelangt direkt zum Planspiegel 105.

Bei diesem optischen Aufbau resultiert jede Verschiebung $\Delta L_1$ des mit dem Prüfling verbundenen Planspiegels 105 relativ zum Meßkopf 101 in einer Änderung der Weglänge des Meßzweiges des Interferometers 104 von $4x \Delta L_1$. Auch bei einer Auslenkung des Tasters 109 um den dargestellten Betrag $\Delta L_2$ ändert sich die Weglänge des aus den beiden Teilstrahlen 107 und 108 bestehenden Meßzweiges um $4x \Delta L_2$. Somit ist sichergestellt, daß Verschiebungen des Planspiegels 105, des Meßkopfes 101 und des Tasters 109 in Betrag und Vorzeichen übereinstimmend vom Interferometer 104 erfaßt werden.

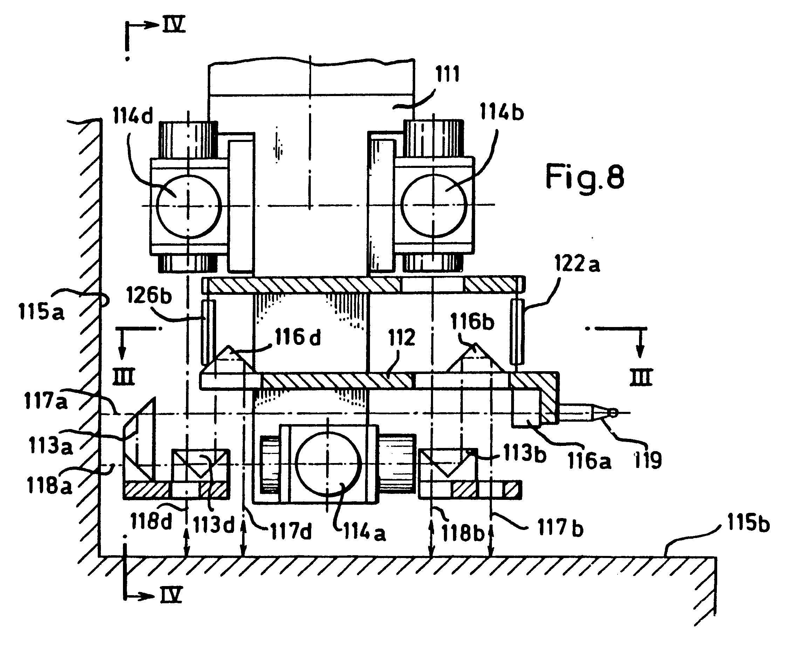

In den Fig. 8 - 10 sind drei Schnitte der konkreten Ausführungsform einer dreidimensionalen Meßeinrichtung dargestellt. Sie besitzt ein Raumnormal aus drei flächigen, senkrecht nach Art eines Tripelspiegels aufeinander angeordneten Einzelspiegeln 115a, b und c, die mit dem nicht dargestellten Werkstück verbunden sind. Relativ dazu ist das die Meßsysteme tragende Teil 111 in drei Koordinaten verfahrbar. Am Teil 111 ist mit Hilfe des Blattfederpaares 122a und 122b der Träger 112 für den Taster 119 in Richtung senkrecht zur Spiegelfläche 115a beweglich aufgehängt.

Die Position des Tasters 119 in Bewegungsrichtung wird durch das Interferometer 114a erfaßt, dessen beide Teilstrahlen 117a und 118a direkt bzw. nach zweifacher Umlenkung an den Prismen 113a und 116a den Gegenspiegel 115a anmessen.

Versatz des Halters 112 in der Richtung senkrecht zum spiegel 115b und Drehungen des Halters 112 um eine senkrecht auf dem Spiegel 115c stehende Achse werden durch die beiden versetzt zueinander angeordneten Interferometer 114b und 114d erfaßt. Deren über den Halter 112 des Taststifts 119 geführten Teilstrahlen 117b und

117d werden entsprechend durch je zwei Prismen 113b/116b und 113d/116d gefaltet, während mit den Teilstrahlen 118b und 118d der Spiegel 115b wieder direkt angemessen wird.

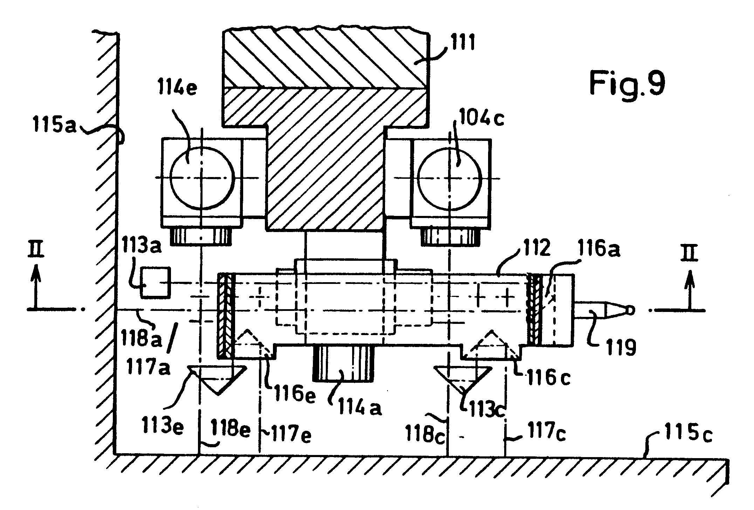

Schließlich besitzt die Meßeinrichtung wie im Schnitt III der Fig 8 aus Fig. 9 zu sehen ist zwei weitere Interferometer 114c und 114e, die Versatz des Tasters in der Richtung senkrecht zur Spiegelfläche 115c und Schwenkbewegungen des Schlittens 102 um eine senkrecht auf der Spiegelfläche 115b stehenden Achse erfassen. Die zur Strahlführung verwendeten Prismen sind mit 113c und e bzw. 116c und e beziffert.

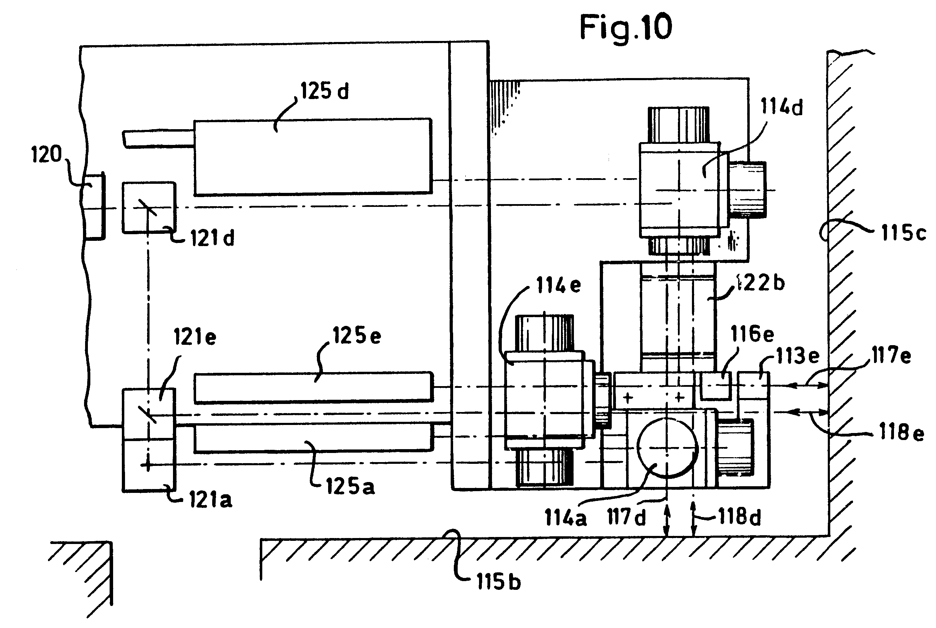

Mit den genannten fünf Interferometern werden abgesehen von Drehungen des Halters 112 um die Achse des Taststifts 119, die sich nicht auf die Vermessung des Prüflings auswirken, alle Freiheitsgrade der Bewegung zwischen dem Spiegelnormal 115 und der Meßeinrichtung 111 erfaßt. Versorgt werden die fünf Interferometer durch ein Strahlteilersystem 121 von einem gemeinsamen Laser 120 aus. Jedem Interferometer 114 ist außerdem eine optoelektronische Empfangseinheit 125 zugeordnet, von denen in Fig. 10 nur die Einheiten 125a, d und e zu sehen sind.

**Patentansprüche**

1. Dreidimensionale interferometrische Längenmeßeinrichtung mit einer relativ zu dem die Meßsysteme tragenden Gehäuse (9) beweglichen Werkstückaufnahme (2), dadurch gekennzeichnet, daß an der Werkstückaufnahme (2) ein starres Raumnormal in Form dreier senkrecht zueinander angeordneter Spiegel (4, 5, 6) befestigt ist, die sich jeweils flächenhaft über den gesamten Meßbereich zweier Koordinatenrichtungen erstrecken und drei interferometrischen Meßstrahlen als Reflektoren dienen und daß die Meßstrahlen von einem im Inneren des von den Spiegel (4, 5, 6) gebildeten Halbraums angeordnete Meßkopf ausgehen.

2. Dreidimensionale, interferometrische Längenmeßeinrichtung mit einer relativ zu dem die Meßsysteme tragenden Gehäuse (29) beweglichen Werkstückaufnahme (22), dadurch gekennzeichnet, daß an der Werkstückaufnahme (22) ein starres Raumnormal in Form dreier senkrecht zueinander angeordneter Spiegel (24, 25, 26) befestigt ist, von denen zwei (24, 25) sich über den Meßbereich in einer Koordinate erstrecken und einer der Spiegel (26) sich über den Meßbereich zweier Koordinatenrichtungen (x, y) erstreckt, daß die Werkstückaufnahme (22) und das Gehäuse (29) relativ zueinander in der durch die beiden Koordinaten (x, y) definierten Ebene verschiebbar sind, und daß das Gehäuse (29) einen in der dritten Koordinatenrichtung (Z) verschiebbaren Taster (27) trägt, an dem mindestens ein weiterer Spiegel (38) befestigt ist, der eine interferometrische Differenzmessung des Abstandes zwischen der Stellung des Tasters (27) und der Spiegelfläche (26) des Raumnormals erlaubt.

3. Meßeinrichtung nach Anspruch 2, dadurch gekennzeichnet, daß der Taster (27) einen rechteckig geformten und verspiegelten Schaft besitzt, der von zwei beahstandeten interferometrischen Strahlenbündeln angemessen wird.

4. Meßeinrichtung nach Anspruch 2, dadurch gekennzeichnet, daß der Boden der waagerecht verschiebbaren Werkstückaufnahme (22) als Spiegel (26) ausgebildet ist.

5. Meßeinrichtung nach Anspruch 1 - 4, dadurch gekennzeichnet, daß die Werkstückaufnahme (Tisch 2 ; 22) und das Raumnormal (Spiegel 4, 5, 6 bzw 24, 25, 26) aus dem gleichen Material mit kleiner Wärmeausdehnung gefertigt sind.

6. Meßeinrichtung nach Anspruch 1 - 5, dadurch gekennzeichnet, daß mindestens einer der interferometrischen Meßstrahlen aus zwei Teilstrahlen (107, 108; 117, 118) besteht und jeweils einer der beiden Teilstrahlen (107; 117) über ein seine Richtung umkehrendes Spiegelsystem (Prisma 106; 116) geführt wird, das an einem in mindestens einer Koordinate gegenüber der Längenmeßeinrichtung (101; 111) beweglich gelagerten Taststifthalter (102; 112) befestigt ist.

7. Meßeinrichtung nach Anspruch 6, dadurch gekennzeichnet, daß die beiden Teilstrahlen (107, 108) van einem an sich bekannten Doppelstrahl-Planspiegelinterferameter (104) ausgesandt werden.

8. Meßeinrichtung nach Anspruch 6, dadurch gekennzeichnet, daß es sich bei dem Spiegelsystem um ein Tripelprisma (106, 116) handelt.

9. Meßeinrichtung nach Anspruch 6, dadurch gekennzeichnet, daß das am Taststifthalter (102) befestigte Spiegelsystem (Tripelprisma 106, 116) zwischen dem Gegenspiegel (105; 115a, b, c) und einem weiteren, an der Längenmeßeinrichtung (101; 111) befestigten und die Richtung des Meßstrahls (107; 117) umkehrenden Spiegelsystem (103; 113) angeordnet ist.

10. Meßeinrichtung nach Anspruch 6 dadurch gekennzeichnet, daß der Taststifthalter (112) mindestens drei separate Spiegelsysteme (116a, b, c) trägt, die drei längs der Achsen eines kartesischen Koordinatensystems geführten interferometrischen Meßstrahlen (117a, b, c) als Reflektoren dienen.

11. Meßeinrichtung nach Anspruch 6, dadurch gekennzeichnet, daß der Taststifthalter (112) in mindestens einer Koordinatenrichtung zwei gegeneinander versetzt angeordnete Spiegelsysteme (116b, d; c, e) trägt, über die zwei zueinander parallele Meßstrahlen (117b, d; c, e) geführt werden.

12. Meßeinrichtung nach Anspruch 10, gekennzeichnet durch ein Strahlteilersystem (121), das die Teilstrahlen für die verschiedenen interferometrischen Meßsysteme (114a - e) aus dem Ausgangsstrahl eines Lasergenerators (110;

120) auskoppelt.

13. Meßeinrichtung nach Anspruch 7, dadurch gekennzeichnet, daß der Taststifthalter (112) mit Hilfe von Blattfedern (122a, b) an dem die Interferometer tragenden Teil (111) der Meßeinrichtung aufgehängt ist.

14. Meßeinrichtung nach Anspruch 6, dadurch gekennzeichnet, daß der Taststifthalter (102; 112) eine Tastsonde (109; 119) trägt.

15. Meßeinrichtung noch Anspruch 7, dadurch gekennzeichnet, daß der Taststifthalter (102; 112) eine Prüf- ader Justiereinrichtung trägt.


**Claims**

1. A three-dimensional interferometric length-measuring device having a work holder (2) which is movable relative to a housing (9), which carries the measurement system, characterized by the fact that a rigid three-dimensional reference body is fastened to the work holder (2), said body comprising three mirrors (4, 5, 6) in mutually perpendicular relation, each of said mirrors extending in area over the entire measurement range of two coordinate directions and serving as reflectors for three interferometric measurement beams, and by the fact that the measurement beams extend from a measurement head which is arranged within the semi-infinite space formed by the mirrors (4, 5, 6).

2. A three-dimensional interferometric length-measuring device having a work holder (22) which is movable relative to a housing (29) which carries the measurement system, characterized by the fact that a rigid three-dimensional reference body is fastened to the work holder (22), said body comprising three mirrors (24, 25, 26) in mutually perpendicular relation, each one of two (24, 25) of said mirrors extending over the measurement range in one coordinate while the third one of the mirrors (26) extends over the measurement range in two coordinate directions (x, y), by the fact that the work holder (22) and the housing (29) are displaceable relative to each other in the plane defined by said two coordinates (x, y), and by the fact that the housing (29) carries a probe (27) which is displaceable in the third coordinate direction (z) and to which there is fastened at least one further mirror (38) which permits an interferometric difference measurement of the distance between the position of the probe (27) and the mirror surface (26) of the three-dimensional reference body.

3. A measuring device according to claim 2, characterized by the fact that the probe (27) has a rectangularly shaped, mirrored shaft which is measured by two spaced interferometric bundles of rays.

4. A measuring device according to claim 2, characterized by the fact that the bottom of the horizontally displaceable work holder (22) is developed as a mirror (26).

5. A measuring device according to claims 1 to 4, characterized by the fact that the work holder (table 2; 22) and the three-dimensional reference body (mirrors 4, 5, 6 or 24, 25, 26) are made of the same material of low thermal expansion.

6. A measuring device according to claims 1 to 5, characterized by the fact that at least one of the interferometric measurement beams consists of two individual beams (107, 108; 117, 118) and that one of said two individual beams (107; 117) is conducted over a mirror system (prism 106; 116) which reverses its direction, said mirror system being carried by the probe-pin holder (102; 112), and said probe-pin holder being supported for movement with respect to the length-measuring device (101; 111) in at least one coordinate direction.

7. A measuring device according to claim 6, characterized by the fact that the two individual beams (107, 108) are emitted by a known double-beam plane-mirror interferometer (104).

8. A measuring device according to claim 6, characterized by the fact that the mirror system is a triple prism (106, 116).

9. A measuring device according to claim 6, characterized by the fact that the mirror system (triple prism 106, 116) which is fastened to the feeler-pin holder (102) is arranged between the opposing mirror (105; 115a, b, c) and another mirror system (103; 113) which is fastened to the length-measuring device (101, 111) and reverses the direction of the measurement beam (107; 117).

10. A measuring device according to claim 6, characterized by the fact that the probe-pin holder (112) carries at least three separate mitror systems (116a, b, c) which serve as reflectors for three interferometric measurement beams (117a, b, c) guided along the axes of a Cartesian-coordinate system.

11. A measuring device according to claim 6, characterized by the fact that the probe-pin holder (112) carries mirror systems (116b, d; c, e) which are arranged in spaced relation from each other in at least one coordinate direction and over which two measurement beams (117b, d; c, e) which are parallel to each other are guided.

12. A measuring device according to claim 10, characterized by a beam-splitter system (121) which removes the individual beams for the different interferometric measurement systems (114a - e) from the output beam of a single laser generator (110; 120).

13. A measuring device according to claim 6, characterized by the fact that the probe-pin holder (112) is suspended by means of leaf springs (122a, b) from the part (111) of the measuring device which carries the interferometers.

14. A measuring device according to claim 6, characterized by the fact that the probe-pin holder (102; 112) carries a work-contacting probe (109; 119).

15. A measuring device according to claim 6, characterized by the fact that the probe-pin holder (102; 112) carries a testing or adjusting device.

**Revendications**

1. Dispositif de mesure interférométrique de longueur suivant trois dimensions, comprenant un porte-pièce (2) déplaçable par rapport au boîtier ou caisson (9) portant les systèmes de mesure, caractérisé en ce qu'un étalon spatial rigide sous forme de trois miroirs (4, 5, 6) disposés à angle droit les uns par rapport aux autres, est fixé au porte-pièce (2), miroirs dont la surface s'étend chaque fois sur toute la plage de mesure de deux directions de coordonnées et qui servent de réflecteurs pour trois faisceaux de mesure interférométrique, et que les faisceaux de mesure sont issus d'une tête de mesure placée dans un espace semi-infini constitué par les miroirs (4, 5, 6).

2. Dispositif de mesure interférométrique de longueur suivant trois dimensions, comprenant un porte-pièce (22) déplaçable par rapport à un boîtier ou caisson (29) portant les systèmes de mesure, caractérisé en ce qu'un étalon spatial rigide sous forme de trois miroirs (24, 25, 26) disposés à angle droit les uns par rapport aux autres, est fixé rigidement au porte-pièce (22), dont deux miroirs (24, 25) s'étendent sur la plage de mesure dans une coordonnée et dont un miroir (26) s'étend sur la plage de mesure de deux directions de coordonnées (x, y), que le porte-pièce (22) et le caisson (29) sont déplaçables l'un par rapport à l'autre dans le plan défini par les deux coordonnées (x, y) et que le caisson (29) porte un palpeur (27), déplaçable dans la troisième direction de coordonnée (2), auquel est fixé au moins un miroir (38) supplémentaire qui permet une mesure interférométrique differentielle de la distance entre l'emplacement du palpeur (27) et la surface de miroir (26) de l'étalon spatial.

3. Dispositif selon la revendication 2, caractérisé en ce que le palpeur (27) possède une tige de section rectangulaire et qui est rendue réfléchissante, par rapport à laquelle sont réalisées les mesures a l'aide de deux faisceaux interférométriques espaces l'un de l'autre.

4. Dispositif de mesure selon la revendication 2, caractérisé en ce que le fond due porte-pièce (22), déplaçable horizontalement, est réalisé comme un miroir (26).

5. Dispositif selon les revendications 1 - 4, caractérisé en ce que le porte-pièce (table 2; 22) et l'étalon spatial ( miroirs 4, 5, 6 respectivement 24, 25, 26) sont fabriqués du même matériau, ayant une faible dilatation thermique.

6. Dispositif selon les revendications 1 - 3, caractérisé en ce que l'un au moins des faisceaux de mesure interférométrique est constitué de deux faisceaux partiels (107, 108; 117, 118), l'un des deux faisceaux partiels (107; 117) étant amené chaque fois à passer par un système de miroirs (prisme 106; 116) inversant sa direction et qui est fixé à un support de tige de palpage (102; 112), support qui est monté pour pouvoir être déplacé en au moins une coordonnée par rapport au dispositif de mesure de longueur (101; 111).

7. Dispositif de mesure selon la revendication 6, caractérisé en ce que les deux faisceaux partiels (107, 108) sont émis par un interféromètre à miroir plan et à double faisceau (104), qui est en lui-même connu.

8. Dispositif selon la revendication 6, caractérisé en ce que le système de miroirs est un prisme triple (106, 116).

9. Dispositif selon la revendication 6, caractérisé en ce que le système de miroirs (prisme triple 106, 116) fixé au support (102) de la tige de palpage, est disposé entre le miroir antagoniste (105; 115a, b, c) et un système de miroirs supplémentaire (103; 113) fixé au dispositif de mesure de longueur (101; 111) et inversant la direction du faisceau de mesure (107; 117).

10. Dispositif de mesure selon la revendication 6, caractérisé en ce que le support (112) de la tige de palpage porte au moins trois systèmes de miroirs séparés (116a, b, c) qui servent de réflecteurs pour des faisceaux de mesure interférométriques (117a, b, c,) guidés suivant les axes d'un système de coordonnées cartésiennes

11. Dispositif de mesure selon la revendication 6, caractérisé en ce que le support (112) de la tige de palpage porte deux systèmes de miroirs (116b, d; c, e), disposés décalés l'un par rapport à l'autre dans au moins une direction de coordonnée, par lesquels sont guidés deux faisceaux de mesure (117b, d; c, e) parallèles entre eux.

12. Dispositif de mesure selon la revendication 10, caractérisé par un système séparateur de faisceau (121) pour le découplage des faisceaux partiels, destinés aux différents systèmes de mesure interférométrique (114a - e), d'un faisceau de départ fourni par un générateur laser (110, 120).

13. Dispositif de mesure selon la revendication 6, caractérisé en ce que le support (112) de la tige de palpage est suspendu à l'aide de ressorts plats (122a, b) à la partie (111) du dispositif de mesure portant les interféromètres.

14. Dispositif de mesure selon la revendication 6, caractérisé en ce que le support (102, 112) de la tige de palpage porte une sonde de palpage (109, 119).

15. Dispositif de mesure selon la revendication 6, caractérisé en ce que le support (102, 112) de la tige de palpage porte un dispositif de contrôle ou d'ajustement.

Fig.1

Fig. 2

Fig. 3

# Fig. 4

# Fig.5

**Fig.6**

**Fig.7**

Fig.8

Fig.9

0 084 144

Fig.10